# FASCICULE DE BREVET EUROPEEN

(11) **EP 0 502 282 B1**
(45) Date de publication et mention de la délivrance du brevet: **07.06.1995**
(21) Numéro de dépôt: 91403339.4
(22) Date de dépôt: 10.12.1991
(51) Int. Cl.: F16D 66/02

(54) **Procédé et dispositif de contrôle du bon fonctionnement d'un frein à mâchoires**
Verfahren und Vorrichtung zur Kontrolle der Funktionstüchtigkeit einer Backenbremse
Procedure and device for the control of appropiate operation of a block brake

(30) Priorité: 07.03.1991 FR 9102737
(43) Date de publication de la demande: 09.09.1992
(73) Titulaire: OTIS ELEVATOR COMPANY, Farmington, CT 06032 (US)
(72) Inventeur: Verillon, Alain, F-93420 Villepinte (FR); Cavallo, Jean-Louis, F-95100 Argenteuil (FR)
(74) Mandataire: Jolly, Jean-Pierre

(56) Documents cités:
- EP-A- 0 391 047

## Description

La présente invention concerne un dispositif de contrôle en continu du bon fonctionnement d'un frein à mâchoires, et plus précisément de l'état de serrage des mâchoires et du degré d'usure des garnitures de friction.

Le contrôle d'un frein à mâchoires est particulièrement nécessaire lorsque le frein ne fonctionne qu'à de rares occasions et qu'il est de ce fait, sujet au grippage. Dans ce cas, les mâchoires risquent de se desserrer insuffisamment, ce qui peut provoquer l'usure prématurée des garnitures. Cette situation se présente couramment dans les freins de machines d'entraînement d'escaliers mécaniques, de tapis roulants ou de cabines d'ascenseurs.

Jusqu'à présent, le contrôle du bon fonctionnement dès freins de ces machines était fait périodiquement, ou lors d'une intervention exceptionnelle, par suite d'un défaut de fonctionnement du frein, et de ce fait les défauts de la levée correcte des mâchoires n'étaient décelés le plus souvent que tardivement, après que les garnitures de friction aient été fortement usées.

De plus, lors d'une intervention de contrôle des freins, l'immobilisation de la machine dure relativement longtemps, ce qui est préjudiciable aux utilisateurs et est coûteux. D'autre part, la mise en place des appareils de contrôle est laborieuse du fait de la présence d'interfaces mécanique et électrique relativement compliqués.

La présente invention a pour but de remédier à ces inconvénients et concerne à cet effet un dispositif de contrôle du bon fonctionnement d'un frein à mâchoires de machine rotative selon la revendication 1.

Si les moyens de contrôle réagissent normalement aux tests cycliques de l'état de serrage des mâchoires et de l'état d'usure des garnitures de friction, ils sont en bon état de fonctionnement.

L'apparition d'un seul défaut sur les informations traitées aura pour effet d'arrêter la machine jusqu'à l'intervention d'un agent de maintenance.

Les moyens de test sont constitués par une horloge qui génère des signaux rectangulaires de fréquence fixe, dont la partie supérieure sert à analyser les informations reçues des palpeurs d'usure et des palpeurs de position et dont la partie basse sert à vérifier que lesdits premier et second moyens de contrôle sont en bon état.

Selon l'invention, le dispositif de contrôle se présente sous forme de coffret ou kit pouvant être adapté sur toute machine existante pourvue de freins à mâchoires, ou pouvant être intégré sur la machine lors de son assemblage en usine.

Le dispositif selon l'invention, permet donc d'effectuer en continu de façon cyclique non seulement le contrôle du bon fonctionnement du frein, mais également celui du relais de défauts. Le contrôle est ainsi exercé en permanence, et l'on comprend qu'en cas de défaut, la durée d'immobilisation de la machine soit extrêmement réduite. De plus, les interfaces électrique et mécanique avec le système de contrôle existant de la machine sont simples.

L'invention concerne également un procédé de contrôle selon la revendication 5.

L'invention sera décrite à présent en regard du dessin annexé dans lequel :
La figure 1 est une vue schématique, en coupe transversale, d'un frein à mâchoires muni du dispositif de contrôle ; et
La figure 2 est un schéma synoptique fonctionnel du dispositif de contrôle.

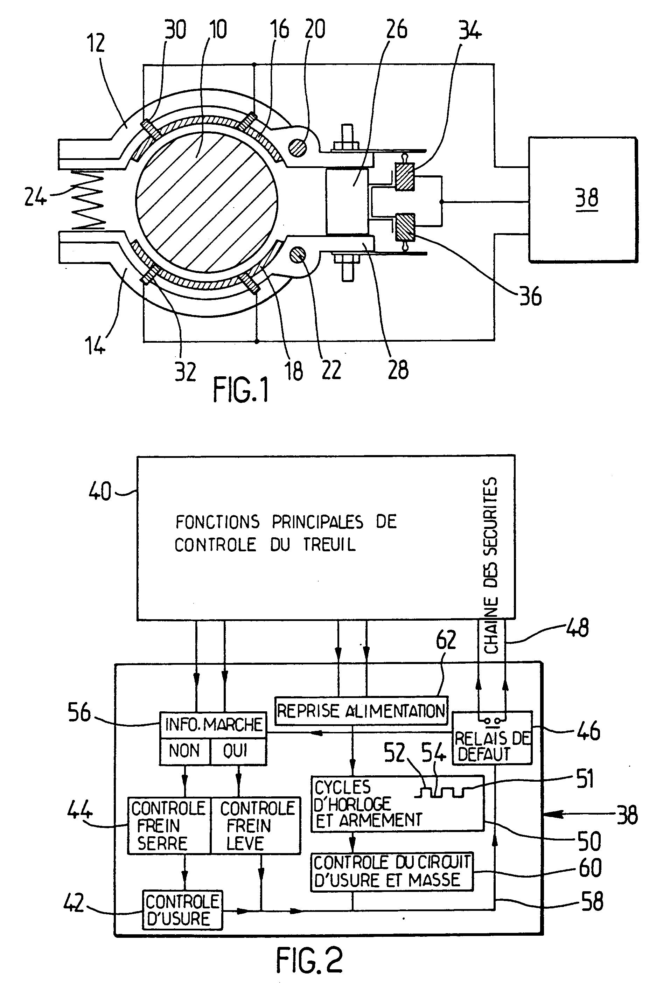

Sur la figure 1, on a représenté un frein à tambour, seulement à titre d'exemple, car l'invention n'est pas limitée à ce seul type de frein, mais également à d'autres types, tels que freins à disques, ou autres.

Le frein représenté sur la figure 1, comprend de façon connue en soi, d'une part un tambour rotatif 10 entraîné par des moyens moteurs, qui, dans le cas des escaliers mécaniques ou des cabines d'ascenseurs, peuvent être constitués par un treuil, et d'autre part par deux mâchoires semi-cylindriques 12,14 munies sur leur face interne de garnitures de friction 16,18. Les mâchoires sont articulées autour d'axes de pivotement parallèles 20, 22. Elles sont normalement maintenues en position serrée par un ressort de rappel 24 et peuvent être amenées en position de desserrage par un électro-aimant 26 agissant sur des brides 28 formées aux extrémités des mâchoires.

Le dispositif de contrôle selon l'invention comprend des palpeurs d'usure 30,32 insérés dans les garnitures de friction 16,18, et des palpeurs de position 34,36 fixés sur l'électro-aimant 26 et destinés à détecter l'ouverture ou la fermeture des mâchoires. Tous ces palpeurs sont connectés électriquement à un coffret de commande 38 servant au contrôle des signaux émis par les palpeurs, et qui est lui-même connecté à une armoire 40 de contrôle du treuil (figure 2).

Le coffret de commande 38 comprend notamment des moyens de contrôle d'usure 42 recevant des signaux émis par les palpeurs d'usure 30,32, et des moyens de contrôle de position 44 recevant les signaux émis par les palpeurs de position 34,36. Ces moyens de contrôle 42,44 commandent un relais de défauts 46 dès qu'ils détectent soit une usure anormale des garnitures 16,18, soit un serrage anormal des mâchoires 12,14. Dans ce cas, ledit relais déclenche une chaîne de sécurités 48 et l'arrêt de la machine.

Le coffret comprend également un dispositif de test ou horloge 50 destiné à tester le bon fonctionnement des moyens de contrôle d'usure 42 et de position 44 ainsi que du relais de défauts 46. Le dispositif de test génère des cycles d'horloge à intervalles réguliers sous forme d'un train d'impulsions rectangulaires 51, de période égale par exemple à 1 seconde, les fronts successifs des impulsions étant séparés par une durée de 0,5 seconde. La partie supérieure 52 de chaque impulsion sert à analyser les informations reçues des palpeurs d'usure 30,32 et des palpeurs de position 34,36, tandis que la partie inférieure 54 sert à tester l'état des moyens de contrôle d'usure 42 et des moyens de contrôle de position 44.

On décrira à présent le fonctionnement du dispositif de contrôle selon l'invention en regard du schéma synoptique fonctionnel de la figure 2.

Si une information de marche est reçue par le dispositif 56 depuis l'armoire 40, les moyens de contrôle 44 vérifient si le frein est bien levé.

Au contraire, si aucune information de marche n'est reçue, les moyens de contrôle 44 vérifient que le frein est serré et les moyens de contrôle 42 vérifient que les garnitures 16,18 sont usées. Si c'est le cas, un signal de commande est envoyé par la liaison 58 au relais de défauts 46, lequel déclenche les chaînes de sécurité 48 et empêche la mise en marche ou arrête la machine.

Chaque impulsion effectue cycliquement un contrôle du circuit d'usure en 60 ainsi qu'un contrôle du relais de défauts 46. Une reprise d'alimentation est effectuée en 62 après un arrêt du moteur.

Le dispositif de contrôle selon l'invention assure donc une sécurité totale sur l'état de fonctionnement mécanique du frein. Il effectue un contrôle de la levée effective et suffisante des mâchoires, un contrôle permanent des circuits électriques de surveillance du frein, ainsi qu'un contrôle cyclique de l'usure des garnitures de friction.

## Revendications

1. Dispositif de contrôle du bon fonctionnement d'un frein de machine rotative comprenant un tambour (10) entraîné en rotation par un moteur, et deux mâchoires (12, 14) munies de garnitures de friction (16, 18) destinées à serrer le tambour entre elles, ledit dispositif étant caractérisé en ce qu'il comprend :
- des palpeurs d'usure (30, 32) pour la détection de l'usure des garnitures de friction (16, 18) ;
- des palpeurs de position (34, 36) pour la détection de la position des mâchoires (12, 14) par rapport au tambour (10) ;
- et un coffret de contrôle électrique (38) comprenant :
a) des premiers moyens de contrôle (42) pour le contrôle des informations émises par les palpeurs d'usure (30, 32) ;
b) de seconds moyens de contrôle (44) pour le contrôle des informations émises par les palpeurs de position (34, 36) ;
c) des troisièmes moyens de contrôle (60) utilisant des signaux de défaut simulés (52, 54) émis par des moyens de test (50) pour effectuer périodiquement un contrôle de l'usure des garnitures de friction et de la position des mâchoires, puis le bon état des constituants desdits premiers moyens de contrôle (42) et desdits seconds moyens de contrôle (44);
- un relais de défauts (46) destiné à commander l'arrêt du moteur d'entraînement du tambour (10), lorsque les palpeurs d'usure (30, 32) transmettent aux premiers moyens de contrôle (42) une information d'usure anormale des garnitures de friction, ou lorsque les palpeurs de position (34, 36) transmettent aux seconds moyens de contrôle (44) une information de serrage anormal des mâchoires, ou encore lorsque lesdits premiers et seconds moyens de contrôle d'informations (42, 44) n'ont pas réagi normalement auxdits signaux de défaut simulés (52, 54) ; et
- un dispositif de réarmement (62) destiné à réarmer ledit relais de défaut pour l'amener dans l'état d'autorisation de fonctionnement de la machine sous condition du bon état d'usure des garnitures de friction, du desserrrage des mâchoires et du test correct des premiers et seconds moyens de contrôle.

2. Dispositif de contrôle selon la revendication 1, caractérisé en ce que lesdits moyens de test sont constitués par une horloge (50) qui génère des impulsions rectangulaires de période fixe.

3. Dispositif de contrôle selon la revendication 2, caractérisé en ce que la période des impulsions est de 1 seconde, les fronts successifs ascendant et descendant se succédant à 0,5 seconde d'intervalle.

4. Dispositif de contrôle selon la revendication 1, caractérisé en ce que ledit coffret (38) peut être adapté sur toute machine rotative existante pourvue de freins à mâchoires ou pouvant être intégré sur la machine lors de son assemblage en usine.

5. Procédé de contrôle du bon fonctionnement d'un frein à mâchoires d'une machine rotative utilisant un dispositif selon l'une des revendications précédentes, caractérisé en ce qu'il consiste :
- à tester automatiquement, de façon périodique et en permanence, l'état du serrage des mâchoires, l'état d'usure des garnitures de friction et le fonctionnement des premiers et seconds moyens de contrôle des informations,
- et à réarmer ledit relais de défauts lors de la mise sous tension du dispositif de contrôle pour l'amener dans l'état d'autorisation de fonctionnement de la machine rotative, sous condition du bon état d'usure des garnitures de friction, du desserrage des mâchoires et du test correct des premiers et seconds moyens de contrôle.

6. Procédé de contrôle selon la revendication 5, caractérisé en ce que la test est effectué au moyen d'un train continu et périodique d'impulsions rectangulaires (51) de période fixe, dont la partie supérieure (52) sert à analyser les informations reçues des palpeurs d'usure et des palpeurs de position et dont la partie basse (54) sert à vérifier que lesdits moyens de contrôle (42, 44) sont en bon état.

## Claims

1. Device for monitoring the satisfactory operation of a brake in a rotary machine, comprising a drum (10) rotationally driven by a motor, and two blocks (12, 14) fitted with friction linings (16, 18), adapted to clamp the drum between them, said device being characterised in that it comprises :
- wear sensors (30, 32) for detecting the wear of the friction linings (16, 18);
- position sensors (34, 36) for detecting the position of the blocks (12, 14) relative to the drum (10);
- and an electrical monitoring box (38) comprising:
a) first monitoring means (42) for monitoring the information emitted by the wear sensors (30, 32);
b) second monitoring means (44) for monitoring the data emitted by the position sensors (34, 36);
c) third monitoring means (60) using the simulated fault signals (52, 54) emitted by the test means (50) in order to carry out, periodically, a monitoring of the wear of the friction linings and the position of the blocks, as well as the satisfactory condition of the components of said first monitoring means (42) and of said second monitoring means (44);
- a fault relay (46) intended to actuate the shutdown of the drive motor of the drum (10) when the wear sensors (30, 32) transmit, to the first monitoring means (42), data as to abnormal wear of the friction linings, or when the position sensors (34, 36) transmit, to the second monitoring means (44), data as to abnormal gripping of the blocks, or when said first and second data monitoring means (42, 44) have not reacted normally to said simulated fault signals (52, 54); and
- a resetting device (62) intended to reset said fault relay in order to put it into a state to authorise the functioning of the machine under the condition that the friction linings are in a good state of wear, the blocks have unclamped and the first and second monitoring means have been tested and found satisfactory.

2. Monitoring device according to claim 1, characterised in that said test means consist of a timer (50) which generates rectangular pulses of fixed period.

3. Monitoring device according to claim 2, characterised in that the period of the pulses is 1 second, the successive ascending and descending fronts succeeding at intervals of 0.5 seconds.

4. Monitoring device according to claim 1, characterised in that the box (38) may be adapted to fit any existing rotary machine equipped with block brakes or may be integrated in the machine during its assembly in the factory.

5. Process for monitoring the satisfactory operation of a block brake in a rotary machine using an apparatus according to one of the preceding claims, characterised in that it consists,
- in automatically testing, periodically and permanently, the state of clamping of the blocks, the state of wear of the friction linings and the operation of the first and second data monitoring means,
- and in resetting said fault relay when the monitoring device is supplied with current, in order to bring it into a state to authorise the operation of the rotary machine, subject to the good state of wear of the friction linings, the unclamping of the blocks and a satisfactory testing of the first and second monitoring means.

6. Monitoring process according to claim 5, characterised in that the test is carried out using a continuous and periodic series of rectangular pulses (51) of fixed period, the upper part (52) of which serves to analyse the data received from the wear sensors and position sensors and the lower part (54) of which serves to check that said monitoring means (42, 44) are in good condition.

## Patentansprüche

1. Funktionsüberwachungsvorrichtung für eine Bremse einer drehenden Maschine, die eine von einein Motor gedrehte Trommel (10) und zwei Bremsbacken (12, 14) aufweist, die mit Reibbelägen (16, 18) ausgestattet sind, welche dazu dienen, die Trommel zwischen sich einzuklemmen,
**dadurch gekennzeichnet**,
daß die Vorrichtung aufweist:
- Verschleißfühler (30, 32) zum Feststellen des Verschleißes der Reibbeläge (16, 18);
- Positionsfühler (34, 36) zum Feststellen der Lage der Bremsbacken (12, 14) in Bezug auf die Trommel (10);
- und einen elektrischen Steuerschrank (38), der aufweist:
a) erste Überwachungsmittel (42) zur Überwachung von Informationen, die von den Verschleißfühlern (30, 32) abgegeben werden;
b) zweite Überwachungsmittel (44) zur Überwachung von Informationen, die von den Positionsfühlern (34, 36) abgegeben werden;
c) dritte Überwachungsmittel (60), welche simulierte Fehlersignale verwenden, (52, 54), die von Prüfmitteln (50) ausgegeben werden, um periodisch eine Kontrolle des Verschleißes der Reibbeläge und der Lage der Bremsbeläge und dann des ordnungsgemäßen Zustands der Bauteile der ersten Überwachungsmittel (42) und der zweiten Überwachungsmittel (44) vorzunehmen;
- ein Fehlerrelais (46), welches dazu dient, das Anhalten des Antriebesmotors der Trommel (10) zu veranlassen, wenn die Verschleißfühler (30, 32) an die ersten Überwachungsmittel (42) eine Information über einen anormalen Verschleiß der Reibbeläge übertragen, oder wenn die Positionsfühler (34, 36) an die zweiten Überwachungsmittel (44) eine Information über ein anormales Klemmen der Bremsbacken senden, oder auch wenn die ersten und die zweiten Informationsüberwachungsmittel (42, 44) nicht normal auf die simulierten Fehlersignale (52, 54) angesprochen haben; und
- eine Rückstellvorrichtung (62), die dazu dient, unter der Bedingung des korrekten Zustands des Verschleißes der Reibbeläge, des Lösens der Bremsbeläge und der korrekten Prüfung der ersten und der zweiten Überwachungsmittel das Fehlerrelais zurückzustellen, um es in den Zustand der Funktionsfreigabe der Maschine zu bringen.

2. Vorrichtung nach Anspruch 1,
**dadurch gekennzeichnet**, daß die Prüfmittel gebildet werden durch einen Taktgeber (50), welcher Rechteckimpulse mit fester Periodendauer erzeugt.

3. Vorrichtung nach Anspruch 2,
**dadurch gekennzeichnet**, daß die Periodendauer der Impulse eine Sekunde beträgt, wobei aufeinanderfolgende Vorder- und Rückflanken mit einem Intervall von 0,5 Sekunden aufeinanderfolgen.

4. Vorrichtung nach Anspruch 1,
**dadurch gekennzeichnet**, daß der Schrank (38) für die gesamte vorhandene drehenden Maschine, die mit den Backenbremsen ausgestattet ist, ausgelegt und bei der fabrikmäßigen Montage in die Maschine integriert sein kann.

5. Verfahren zur Funktionsüberwachung einer Backenbremse einer drehenden Maschine unter Verwendung einer Vorrichtung nach einem der vorhergehenden Ansprüche,
**dadurch gekennzeichnet**, daß es besteht aus:
- dem periodischen und permanenten automatischen Prüfen des Zustands des Anziehens der Bremsbacken, des Verschleißzustands der Reibbeläge und der Funktionstüchtigkeit der ersten und der zweiten Überwachungsmittel der Informationen,
- und dem Zurückstellen des Fehlerrelais, wenn die Überwachungsvorrichtung unter Spannung gesetzt wird, um es in den Zustand der Funktionsfreigabe der Drehmaschine zu bringen, vorausgesetzt den ordnungsgemäßen Zustand des Verschleißes der Bremsbeläge, des Lösens der Bremsbacken und der positiven Prüfung der ersten und der zweiten Überwachungsmittel.

6. Verfahren nach Anspruch 5,
**dadurch gekennzeichnet**, daß die Prüfung mit Hilfe eines Zuges periodischer Rechteckimpulse (51) fester Periodendauer erfolgt, von denen der Abschnitt hohen Pegels (52) dazu dient, die von den Verschleißfühlern und Positionsfühlern empfangenen Informationen zu analysieren, und von denen der Teil niedrigen Pegels (54) dazu dient, die Überwachungsmittel (42, 44) bezüglich des funktionstüchtigen Zustands zu verifizieren.
